# EUROPEAN PATENT SPECIFICATION

(11) **EP 1 550 501 B1**
(45) Date of publication and mention of the grant of the patent: **12.12.2007**
(21) Application number: 04031074.0
(22) Date of filing: 31.12.2004
(51) Int. Cl.: B01F 9/08, B01F 9/02, B01F 7/02, B01J 2/00, B01J 2/10

(54) **Method for producing a flowable powdery material**
Verfahren zur Herstellung eines fliessfähigen pulverförmigen Materials
Procédé pour la fabrication d'un matériau fluide et pulvérulent

(30) Priority: 31.12.2003 IT MO20030359
(43) Date of publication of application: 06.07.2005
(73) Proprietor: L.B. Officine Meccaniche S.p.A., 41042 Fiorano Modenese (Modena) (IT)
(72) Inventor: Bigi, Ermes, 41042 Spezzano di Fiorano Modenese (MO) (IT); Bianchini, Alessandro, 41100 Modena (IT); Lolli, Leonardo, 41058 Vignola (MO) (IT)
(74) Representative: Crugnola, Pietro

(56) References cited:
- EP-A- 0 916 462
- EP-B- 0 450 012
- CH-A- 511 055
- DE-A1- 1 507 894
- DE-A1- 2 219 352
- DE-B- 1 239 549
- SU-A1- 390 967
- SU-A1- 486 770
- PATENT ABSTRACTS OF JAPAN vol. 2003, no. 09, 3 September 2003 (2003-09-03) -& JP 2003 126894 A (MITSUBISHI HEAVY IND LTD), 7 May 2003 (2003-05-07)

## Description

The invention relates to a method for producing coloured ceramic powder-material, for example for use in the manufacture of tiles or ceramic slabs.

In particular, the invention relates to that technique of colouring flowable powder-material that does not involve substantial increases in the dimensions of the original material. This technique is applied to the colouring of atomised ceramic powders as it is desirable to colour superficially an atomised powder in a neutral colour with one or more powder pigments the granulometry of which is much less than the granulometry of the atomised powder. In this way, particles of coloured atomised powder can be obtained that have features that are suitable for constituting the body of a tile or of a ceramic slab after possibly being mixed in suitable proportions with analogous differently coloured powders.

EP 0 916 462 discloses a system for manufacturing coloured flowable ceramic material in which a powder ceramic material that has to be coloured is introduced into a mixing apparatus together with one or more powder pigments having a granulometry that is much less than the granulometry of the ceramic material to be coloured. In this way, the ceramic material is superficially coated by the pigment, or by the pigments, as the case may be, and can exit from the mixing apparatus after taking on the desired coloration and be directly usable in the pressing systems.

EP 0 916 462, whilst constituting significant progress in the field of colouring systems for ceramic material, may nevertheless be further improved.

In fact, in EP 0 916 462 the ceramic material to be coloured is distributed in the form of a soft layer on a conveyor belt along a path that leads to the mixing apparatus and the pigment, or the pigments, are metered onto the soft layer in consecutive positions positioned along the conveyor belt.

The soft layer of material to be coloured and the relative pigments are thus exposed to the risk of dispersion in the surrounding atmosphere, which leads to a significant loss of money and to an undesired alteration of the chromatic effect on the material to be coloured and a potential health hazard for operators.

Furthermore, EP 0 916 462 involves a rather complicated plant structure inasmuch as the conveyor belt is placed at an intermediate height between the containers of ceramic material to be coloured and the mixing apparatus, in such a way that the conveyor belt can receive the ceramic material and pigments that are poured onto it under the action of the force of gravity and can pour owing to the gravity the whole formed by the soft layer and the pigment through a common inlet provided in the mixing apparatus.

Mixing the ceramic material and the pigments inside the mixing apparatus thus occurs in a substantially uncontrolled manner.

The plant thus comprises three levels: a top level at which the containers of ceramic material and the pigments are placed, an intermediate level for the conveyor belt and a lower level for the mixing apparatus.

The pigments are metered by extracting them by means of a screw conveyor from the respective containers in a volumetric manner or by measuring the weight loss of the latter.

Metering of the pigments is thus conditioned by the flowability of the pigment particles onto one another and onto the walls of the respective containers.

Such metering is problematic inasmuch as the flowability of the pigments to be metered varies according to the temperature, ambient humidity and specific weight of the pigments.

It is therefore desirable to improve the colouring system of the ceramic powder-material disclosed in EP 0 916 462.

JP2003126894 discloses a method and an apparatus for treating generated earth and a method for producing granular materials capable of reducing a manufacturing cost. Construction-derived soil is granulated to produce the granular materials by charging into a rotating drum the construction-derived soil first, water glass next, and thereafter cement and gypsum board powder, and by rotating the rotating drum having an agitator therein, which transfers the construction-derived soil, etc., while stirring, mixing, crushing and grinding the same.

DE1507894 discloses a mixer for dry or slightly dampened, flowable bulk material such as for example soap powder, plastic granules, colour pigments, sugar, cocoa, fertiliser, including filament products that consists of a mixer container lying on a horizontal plane and a mixing unit consisting of radial arms fixed spirally to a horizontal shaft, which arms each have a scoop arranged near the wall and a second scoop arranged further inside, in which mixer container and mixer unit are driven independently of each other.

An object is to improve the efficiency of known systems for mixing powder-material.

A further object is to achieve more thorough monitoring of the flow of materials to be mixed.

Following the invention, there is provided a method for producing coloured ceramic powder-material according to claim 1.

The coating powder-material can be distributed in minuscule particles, in such a way as to more evenly wrap around the particles of greater dimensions of the powder-material to be coated.

The method may comprise spraying the at least one coating powder-material and thus obtaining even distribution thereof in the mixing chamber. The method may also comprise the use of pneumatic conveying means.

Owing to this aspects of the invention, greater colouring efficiency is obtained, a smaller quantity of pigments therefore needs to be used and a shorter mixing time is required to obtain a desired intensity of colouring.

Furthermore, the provision of distinct inlets for the powder-material to be coated and the coating powder-material enables excellent monitoring of the flows of materials to be obtained that are introduced into the mixing chamber. This significantly limits the dispersal of the powder-material in the environment.

Owing to the use of the pneumatic conveying means, it is possible to improve the metering of colouring powder materials because the humidity and temperature of the dragging air can be controlled in quite a simple manner and the temperature and humidity of the colouring materials can be correspondingly monitored and thus kept at preset temperatures.

It is furthermore possible to significantly simplify the colouring plant because it is no longer necessary to provide three height positioning levels of the various plant elements because the latter can be distributed on two levels or even on one level, particularly when pneumatic conveying means is used.

Having provided independent inlets for the powder-material to be coated and the at least one coating powder-material simplifies the operations required when it is desired to change the coating powder-material and/or the at least one coating powder-material at the end of a short production run with another coating powder-material and/or with another at least one powder-material that it is not desired to become somehow contaminated by the presence of the first material(s) in the system.

In fact, whilst in prior-art plants the parts of the plant have to be thoroughly cleaned that are common to the different materials used, which involves considerable time and cost, according to the invention, cleaning operations are rapid and not costly because there are very few common parts and they substantially comprise only the mixing chamber.

The provision of independent inlets in the mixing chamber for the powder-material to be coated and the at least one coating powder-material furthermore enables to use material having physical and chemical features that are different from those of the material used according to prior art.

In particular, the at least one coating powder-material (for example ceramic pigment), which generally comprises fluidifying additives suitable for increasing the flowability of the at least one coating powder-material, may contain a quantity of additives that is much less than the quantity of additives of the pigments currently used or may even be devoid of them.

Furthermore, the at least one coating powder-material may also be used in the form of a paste, i.e. it may have a high humidity level, which involves a further reduction of the risk of loss through dispersal in the environment.

In a version, a first coating powder-material is introduced into the mixing chamber at a given distance from an end of the mixing chamber, and at least a second coating powder-material is introduced into the mixing chamber at a greater distance from the same end.

In a further version, the first coating powder-material and the at least second coating powder-material are introduced into the mixing chamber intermittently according to a preset or random sequence.

In this way, it is possible to obtain particular colouring effects on the particles of powder-material to be coated after they have been coated, due to the fact that the powder-material to be coated first comes into contact with the first coating powder-material and then into contact with the second coating powder-material when it has already been partially coated by the first. The second coating powder-material is positioned on the surface of the material to be coated in zones that are not occupied by the first coating powder-material. Depending on the quantity of the first coating powder-material and of the second coating material introduced into the mixing chamber, it is possible to check the shades of colour of the coated powder-material .

This enables ceramic tiles to be obtained that have unique aesthetic effects.

The invention may be better understood and implemented through reference to the attached drawings wherein:
Figure 1 is a schematic view of a plant for colouring atomised ceramic powder;
Figure 2 is a transverse section taken along a plane II-II of Figure 1;
Figure 3 is an enlarged and fragmentary schematic longitudinal section of a version of mixer;
Figure 4 is a schematic view of a pressing plant for ceramic tiles associated with a colouring plant;
Figure 5 is a cross-section of a particle of atomised powder for ceramic use coated with a layer of pigment;
Figure 5A is a detailed view of Figure 5;
Figure 6 is a schematic lateral view of an apparatus for the pneumatic conveying of powder-material with positive pressure;
Figure 7 is a view like the one in Figure 6, but relating to a pneumatic conveying with negative pressure.

A plant 1 for colouring ceramic materials comprises a first container 2 of atomised ceramic powder, a second container 3 of colouring oxides and a third container 4 of further colouring oxides. From the first container 2, a first conduit 6 supplies the atomised material to a mixer 5, whilst a second conduit 7 and a third conduit 8 supply a first and respectively a second pigment to the mixer 5 respectively from the second container 3 and from the third container 4.

The mixer 5 comprises a casing 12 that is rotatable around its own longitudinal axis X ed and is provided with an outlet 9 from which the coloured ceramic material exits.

Inside the mixer 5 there is provided a rotor 10, arranged in a coaxial position or at a certain distance from the longitudinal axis X and provided with a series of radial stirring elements 11. The rotor 10 rotates in the same direction as the mixer 5 and produces a vortical movement of the contents of the mixer 5, such contents being indicated overall as 13.

The first conduit 6 leads into a first inlet port 6a arranged in a substantially central position at an end of the mixer 5 opposite the end affected by the outlet 9 and above the zone affected by the contents 13.

The second conduit 7 and the third conduit 8 lead into the same end of the mixer 5 occupied by the first inlet port 6a through respective second and third inlet ports 7a and 8a, located in positions substantially at the side of the inlet port 6a.

The first conduit 6, the second conduit 7 and the third conduit 8 may comprise suitable powder dragging devices, such as for example positive-pressure or negative-pressure pneumatic conveying devices, or mechanical conveying devices, for example metering screw conveyors (the latter in itselves are known and are therefore not disclosed here in greater detail) or a combination of these devices.

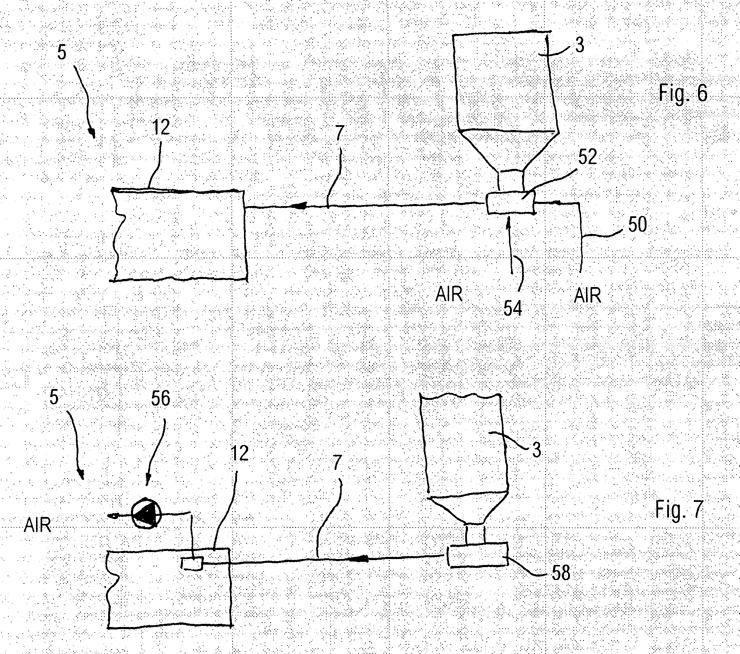

As shown in Figure 6, the second conduit 7 is supplied with pressurized air through a main supply line 50 from which the pressurized air is introduced into a Venturi pipe manifold 52 from which the contents of the second container 3 are sucked. To the manifold 52 further pressurised air is furthermore sent through a secondary supply line 54 that adjusts the air pressure altogether present in the manifold 52 to adjust the flow rate of material that exits from the second container 3.

In Figure 7 it is shown that the second conduit 7 is connected to a vacuum generator 56 located downstream of the mixer 5 from which air is sucked that drags the contents of the second container 3 to the mixer 5 from a manifold 58 located at the outlet port of the latter.

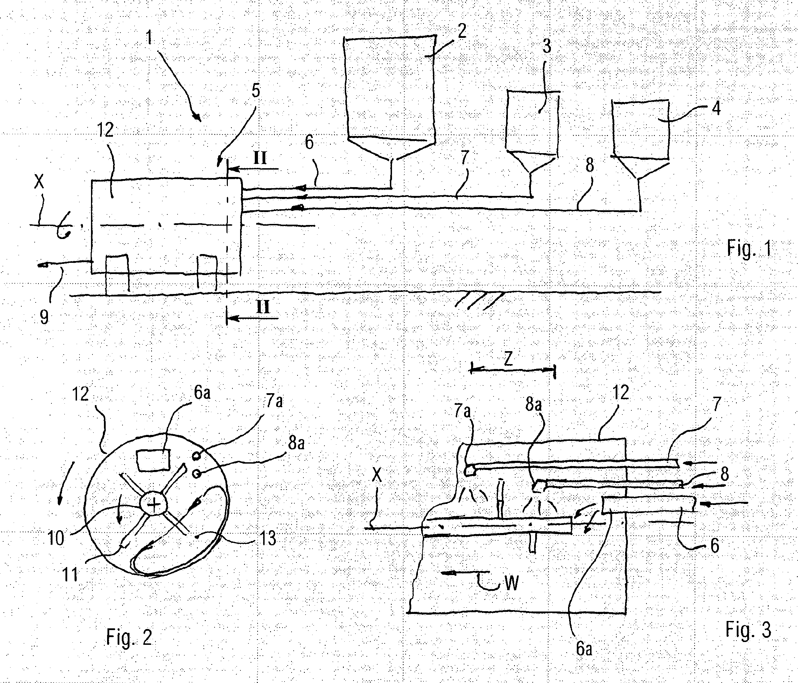

In the version illustrated in Figure 3, the third inlet port 8a leads into the casing 12 downstream of the first inlet port 6a and the second inlet port 7a leads into the casing 12 downstream of the third inlet port 8a. In this way, the atomised ceramic powder that exits from the first inlet port 6a is first run over by the second pigment that exits from the third inlet port 8a and is then coated by the latter.

Subsequently, the atomised ceramic powder that is already externally affected by the second pigment proceeds in an axial direction in the direction indicated by arrow W to the outlet 9, until it is further run over by the first pigment that exits from the second port 7a.

In this version, the third outlet port 8a and the second outlet port 7a are arranged consecutively spaced along the axis X by a distance Z.

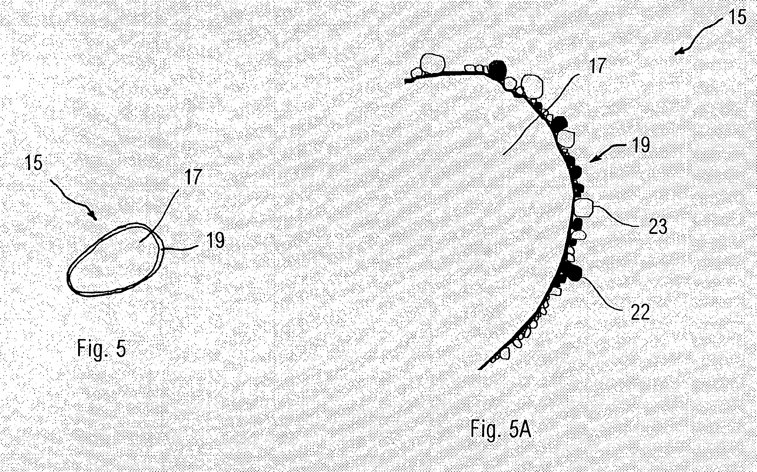

The distance Z can be chosen in such a way that the particles of atomised powder are enveloped in an even manner by the second pigment before coming into contact with the first pigment. In this circumstance, a particle of atomised material 15 shown in Figure 5 is created that comprises a nucleus 17 of atomised powder enveloped by a coating layer 19 having a thickness of at least an order of magnitude less than the average diameter of the nucleus 17.

For example, the nucleus may have a diameter of 700 µm and the layer 19 a thickness of 10 µm.

The coating layer 19 comprises particles of pigment associated with the surface of the particle of atomised material 15, in particular, these particles of pigment are at least partially received in gaps present on the surface of the particle of atomised material 15, being thus embedded in this surface.

Owing to the mixer 5, the quantity of pigment used to coat the atomised ceramic powder is extremely reduced and comprised between approximately 0.1% and about 0.6% in weight of the atomised ceramic powder. Naturally, the quantity of pigment used may be greater or less than the quantities indicated above.

With reference to Figure 5A, the layer 19 comprises more than one pigment, for example a colouring powder oxide 22 and a further colouring powder oxide 23, having different colours from one another. The colouring powder oxide 22 is positioned on the surface of the particle of atomised material 15 and the further colouring powder oxide 23 coats the particle of atomised material 15 in zones that are not occupied by the colouring powder oxide 22.

By varying the quantity of the colouring power oxide 22 and the further colouring powder oxide 23 introduced into the casing 12, it is possible to obtain a wide range of shades of colour of the coated powder-material at the mixer outlet 5. Particular colouring effects of the atomised ceramic powder can also be obtained by introducing into the casing 12 the colouring powder oxides 22 and 23 in subsequent intervals of time.

A particle of atomised material like the one shown in Figure 5 can also be obtained by means of an apparatus like the one in Figure 2 in which the coating powder-material of the second container 3 and the coating powder-material of the third container 4 are introduced one after another in such a way as to run over the nucleus 17 in subsequent intervals of time.

It should be noted that processing water is not introduced into the casing 12, so that the colouring can occur without substantial variations to the relative humidity of the particles of atomised powder.

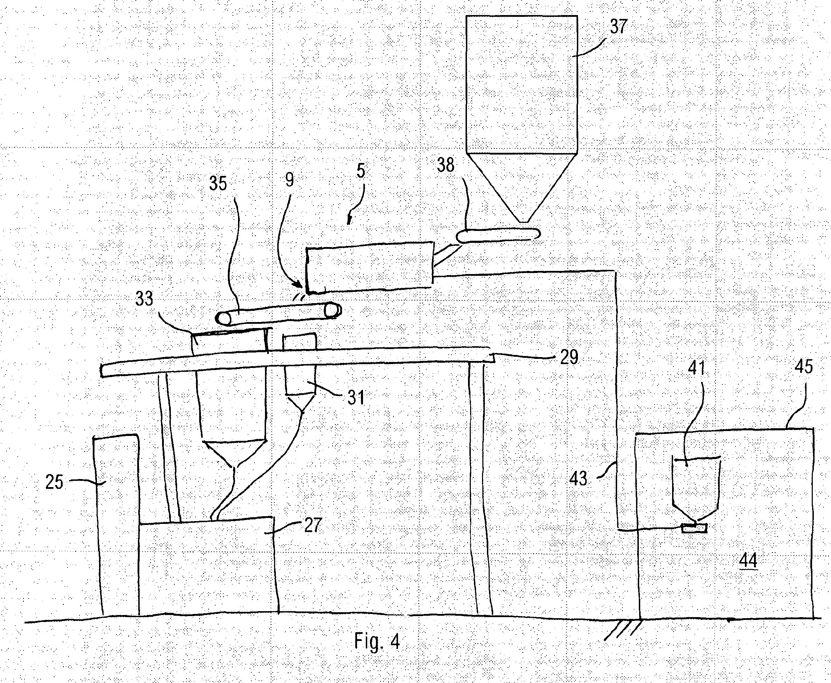

With reference to Figure 4, a ceramic press 25 is shown for forming ceramic tiles, supplied by a loading system 27 on which a support frame 29 extends to which a first silo 31 and at least one second silo 33 are fixed from which atomised powders are taken and possibly coloured with which a soft layer for pressing is formed that is intended to constitute the body of the pressed tiles.

The first silo 31 is supplied by a conveyor belt 35 that extends between the top of the first silo 31 and the outlet 9 of the mixer 5.

The mixer 5 is supplied with atomised powder contained in a third silo 37 by any extraction apparatus, for example a conveyor belt 38, and a first pigment coming from a suitable tank 41 by means of a specific conduit 43. The tank 41 can be placed at ground level if the conduit 43 is provided with a pneumatic conveying system with positive or negative pressure. Furthermore, the tank 41 is located in a chamber 44 that is insulated by walls 45, so that the risk of harmful dispersal of pigment into the surrounding environment is practically eliminated.

When the tank 41 has to be replaced because it is empty or because it is desired to change the colour of the atomised powder in the mixer 5, it is sufficient to access the insulated chamber 44 and replace the tank, or tanks affected. The chamber 44 can in fact contain any number of tanks, depending on the number and type of pigments to be used.

In a version that is not shown, the conveyor belt 35 is not present and the outlet 9 of the mixer 5 is directly associated with the second silo 33, in such a way that the coloured atomised material coming out from the mixer can be collected directly in the second silo 33.

In a further version that is not shown, the mixer 5 and the second container 3-4-41, in particular said second container 3-4-41 comprising pneumatic conveying means, are at the same level and the container 37 of the ceramic material to be coated is located at a higher level. In this version, the plant 1 is much more simplified than the prior-art plants.

In a version that is not shown of the container 3-4-41, the secondary supply line 54 is not present and the contents of the container 3 are pushed into the conduit 7-8-43 by the air coming from the main supply line 50.

To obtain the required coating effect, any type of known mixer can be used.

In a version that is not shown the mixer 5 may be devoid of the rotor 10 or comprise a stationary casing provided internally with a longitudinal rotor, or yet again be of the fluid-dynamic, so-called fluid-bed type.

Of course, there may be any number and type of colouring materials.

## Claims

1. Method for producing coloured ceramic powder-material comprising:
- introducing through an inlet opening (6a) a ceramic powder-material to be coated into a mixing apparatus (5) and introducing in said mixing apparatus (5) at least one coating powder-pigment;
- mixing said ceramic powder-material to be coated and said at least one coating powder-pigment until said ceramic powder-material to be coated is coated superficially by said at least one coating powder-pigment so as to form said coloured ceramic powder-material;
- exiting said coloured ceramic powder-materialvia an outlet opening (9) opposite to said inlet opening (6a); **characterised in that**
- said at least one coating powder-pigment is introduced into said mixing apparatus (5) through a further inlet (7a; 8a) interposed between said inlet opening (6a) and said outlet opening (9).

2. Method according to claim 1, wherein said ceramic powder-material to be coated comprises atomised ceramic powder and said at least one coating powder-pigment comprises a ceramic pigment.

3. Method according to claim 1, or 2, wherein into said mixing apparatus (5) at least one further coating powder-pigment is introduced.

4. Method according to claim 3, wherein said at least one coating powder-pigment and said at least one further coating powder-pigment are intermittently introduced into said mixing apparatus (5).

5. Method according to claim 3, or 4, wherein said at least one coating powder-pigment and said at least one further coating powder-pigment are introduced into spaced zones in a direction of advance (W) in said mixing apparatus (5).

6. Method according to any preceding claim, wherein said ceramic powder-material to be coated, said at least one coating powder-pigment and said at least one further coating powder-pigment, if present, are introduced into said mixing apparatus (5) by the action of pressurised air.

7. Method according to any preceding claim, wherein said introducing comprises metering said ceramic powder-material to be coated and metering said at least one coating powder-pigment.

## Patentansprüche

1. Verfahren zum Herstellen von farbigem keramischem Pulvermaterial mit den Schritten:
- Einführen eines keramischen zu beschichtenden Pulvermaterials durch eine Einlassöffnung (6a) in eine Mischvorrichtung (5) und Einführen wenigstens eines Pulverpigmentes zum Beschichten in die Mischvorrichtung (5);
- Mischen des keramischen zu beschichtenden Pulvermaterials und wenigstens eines Pulverpigmentes zur Beschichtung, bis das keramische zu beschichtende Pulvermaterial durch das wenigstens eine Pulverpigment zur Beschichtung an seiner Oberfläche beschichtet ist, um so das farbige keramische Pulvermaterial zu bilden;
- Austragen des farbigen keramischen Pulvermaterials über eine Auslassöffnung (9) gegenüber der Einlassöffnung (6a), **dadurch gekennzeichnet, dass**
- das wenigstens eine Pulverpigment zur Beschichtung durch einen weiteren Einlass (7a; 8a) eingeführt wird, der zwischen der genannten Einlassöffnung (6a) und der genannten Auslassöffnung (9) liegt.

2. Verfahren nach Anspruch 1, bei dem das keramische zu beschichtende Pulvermaterial gemahlenes Keramikpulver aufweist und wobei das wenigstens eine Pulverpigment zur Beschichtung ein keramisches Pigment aufweist.

3. Verfahren nach Anspruch 1 oder 2, bei dem wenigstens ein weiteres Pulverpigment zur Beschichtung in die Mischvorrichtung (5) eingeführt wird.

4. Verfahren nach Anspruch 3, bei dem das wenigstens eine Pulverpigment zur Beschichtung und das wenigstens eine weitere Pulverpigment zur Beschichtung abwechselnd in die Mischvorrichtung (5) eingeführt werden.

5. Verfahren nach Anspruch 3 oder 4, bei dem das wenigstens eine Pulverpigment zur Beschichtung und das wenigstens eine weitere Pulverpigment zur Beschichtung in beabstandete Zonen in einer Vorwärtsrichtung (W) in die Mischvorrichtung (5) eingeführt werden.

6. Verfahren nach irgendeinem vorhergehenden Anspruch, bei dem das keramische zu beschichtende Pulvermaterial, das wenigstens eine Pulverpigment zur Beschichtung und das wenigstens eine weitere Pulverpigment zur Beschichtung, soweit vorhanden, mit Hilfe von Druckluft in die Mischvorrichtung (5) eingeführt werden.

7. Verfahren nach irgendeinem vorhergehenden Anspruch, bei dem das Einführen ein Messen des keramischen zu beschichtenden Pulvermaterials und ein Messen des wenigstens einen Pulverpigmentes zur Beschichtung umfasst.

## Revendications

1. Procédé de fabrication de matériau céramique coloré en poudre, comprenant :
l'introduction par une ouverture d'entrée (6a) d'un matériau céramique en poudre à enduire dans un mélangeur (5) et l'introduction dans ledit mélangeur (5) d'au moins un pigment de couche en poudre ;
le mélange dudit matériau céramique en poudre à enduire et dudit au moins un pigment de couche en poudre jusqu'à ce que ledit matériau céramique en poudre à enduire soit enduit superficiellement par ledit au moins un pigment de couche en poudre afin de former ledit matériau céramique coloré en poudre ;
l'évacuation dudit matériau céramique coloré en poudre par une ouverture de sortie (9) opposée à l'adite ouverture d'entrée (6a);
***caractérisé en ce que***
ledit au moins un pigment de couche en poudre est introduit dans ledit mélangeur (5) par une entrée supplémentaire (7a ; 8a) interposée entre ladite ouverture d'entrée (6a) et ladite ouverture de sortie (9).

2. Procédé selon la revendication 1, dans lequel ledit matériau céramique en poudre à enduire comprend une poudre céramique atomisée et ledit au moins un pigment de couche en poudre comprend un pigment céramique.

3. Procédé selon la revendication 1 ou 2, dans lequel au moins un pigment de couche en poudre supplémentaire est introduit dans ledit mélangeur (5).

4. Procédé selon la revendication 3, dans lequel ledit au moins un pigment de couche en poudre et ledit au moins un pigment de couche en poudre supplémentaire sont introduits de manière intermittente dans ledit mélangeur (5).

5. Procédé selon la revendication 3 ou 4, dans lequel ledit au moins un pigment de couche en poudre et ledit au moins un pigment de couche en poudre supplémentaire sont introduits dans des zones séparées dans une direction de progression (W) dans ledit mélangeur (5).

6. Procédé selon l'une quelconque des revendications précédentes, dans lequel ledit matériau céramique en poudre à enduire, ledit au moins un pigment de couche en poudre et ledit au moins un pigment de couche en poudre supplémentaire, s'il est présent, sont introduits dans ledit mélangeur (5) par l'action d'air sous pression.

7. Procédé selon l'une quelconque des revendications précédentes, dans lequel ladite introduction comprenant le dosage dudit matériau céramique en poudre à enduire et le dosage dudit au moins un pigment de couche en poudre.
